# EUROPEAN PATENT APPLICATION

(11) **EP 4 840 907 A1**
(43) Date of publication of application: **18.11.2026**
(21) Application number: 25175894.2
(22) Date of filing: 13.05.2025
(51) Int. Cl.: C08L 71/02

(54) **COMPOSITION FOR FORMING A DETAILING MEMBRANE**

(71) Applicant: De Neef Construction Chemicals, 2220 Heist-op-den-Berg (BE)
(72) Inventor: KEMPENAERS, Peter, 2220 Heist-op-den-Berg (BE); PODGORSKA, Malgorzata, 2220 Heist-op-den-Berg (BE); WITCZAK, Pawel, 2220 Heist-op-den-Berg (BE)
(74) Representative: Saint-Gobain Recherche

(57) **Abstract**

The present invention relates to the construction field. More particularly, it relates to a moisture-curable composition comprising a mono-silyl-terminated polymer, a poly-silyl-terminated polymer and a filler, and to the use of such moisture-curable composition to form a coating, such as a detailing membrane. The present invention also relates to a method for sealing a substrate using such moisture-curable composition.

## Description

The present invention relates to the construction field. More particularly, it relates to a moisture-curable composition comprising silyl-terminated polymers and fillers, and to the use of such moisture-curable composition to form a coating, such as a detailing membrane. The present invention also relates to a method for sealing a substrate using such moisture-curable composition.

The construction industry has continually evolved to address the challenges of creating durable and resilient structures. One important aspect of this evolution is the development of detailing membranes, which are essential for protecting and enhancing the performance of various structural components.

A detailing membrane is a flexible, waterproof material used to reinforce and protect critical areas where different materials meet or where structural movement is expected. Its primary function is to prevent water infiltration by sealing joints, seams, corners, and penetrations in building envelopes, roofing, and flooring systems. By accommodating minor substrate movements, it helps prevent cracks from transferring to surface layers while ensuring a secure bond between different construction materials such as concrete, metal, and wood. The membrane's flexibility allows it to absorb thermal expansion and mechanical stresses, making it essential for long-term durability. Commonly used in roofing, basements, wet areas, and facades, detailing membranes play a crucial role in maintaining the structural integrity and longevity of buildings.

Historically, compositions for detailing membranes have included, among others, bitumen, rubber, and various polymers. These conventional compositions have provided a certain level of effectiveness; however, a major drawback is the poor adhesion in various conditions, in particular to damp and dry concrete, after extended periods of water immersion or in low temperature environments, among other conditions.

Therefore, there remains a need to provide a moisture-curable composition having improved adhesion properties, in particular an improved bond-to-concrete.

### SUMMARY

In this context, the inventors have demonstrated that such need could be satisfied by using a moisture-curable composition that combines a mono-silyl-terminated polymer, a poly-silyl-terminated polymer, and fillers. More particularly, they have demonstrated that a coating formed from such composition had excellent bond-to-concrete performances, even after water immersion. Also, they showed that the coating had a high adhesion when applied to various substrates, such as a concrete or metallic substrate.

Thus, the present invention relates to a moisture-curable composition comprising:
- a mono-silyl-terminated polymer,
- a poly-silyl-terminated polymer, and
- a filler.

In some embodiments, said composition comprises no plasticizer, or if present, the weight content of such plasticizer is less than 5 %, based on the total weight of the composition.

In some embodiments, the polymer of said mono-silyl-terminated polymer is chosen from polyethers, polyesters, polyurethanes, polycarbonates, polyacrylates, polyisoprenes, polybutadienes, or any combination thereof.

In some embodiments, said mono-silyl-terminated polymer is a mono-silyl-terminated polyether.

In some embodiments, the molecular weight of the mono-silyl-terminated polymer is from 2,000 to 50,000 g/mol, preferably from 4,000 to 40,000 g/mol, more preferably from 5,000 to 30,000 g/mol.

In some embodiments, the polymer of said poly-silyl-terminated polymer is chosen from polyethers, polyesters, polyurethanes, polycarbonates, polyacrylates, polyisoprenes, polybutadienes, or any combination thereof.

In some embodiments, said poly-silyl-terminated polymer is a poly-silyl-terminated polyether. In some embodiments, said poly-silyl-terminated polymer is a tri-silyl-terminated polyether. In some embodiments, the molecular weight of the poly-silyl-terminated polymer is from 2,000 to 200,000 g/mol, preferably from 5,000 to 100,000 g/mol.

In some embodiments, the filler is chosen from talc, dolomite, mica, ground basalt, kaolin, chalk, powdered lime, fumed silica, zeolites, bentonites, magnesium carbonate, calcium carbonate, calcium sulfate, barium sulfate, kieselguhr, alumina, clay, silica, titanium oxide, iron oxide, zinc oxide, sand, quartz, flint, mica, glass powder, graphite, or any combination thereof, preferably the filler is calcium carbonate.

In some embodiments, the weight ratio of the mono-silyl-terminated polymer to the poly-silyl-terminated polymer is from 0.01 to 4, preferably from 0.1 to 3, more preferably from 0.5 to 2.5, even more preferably from 1 to 2, for instance from 1.3 to 1.7.

In some embodiments, the weight ratio of the total amount of mono-silyl-terminated polymer and poly-silyl-terminated polymer to the amount of filler is from 0.4 to 2, preferably from 0.5 to 1.5, more preferably from 0.8 to 1.2.

In some embodiments, the total weight content of mono-silyl-terminated polymer and poly-silyl-terminated polymer is from 10 to 70 %, preferably from 20 to 60 %, more preferably from 40 to 55 %, based on the total weight of the composition.

In some embodiments, the weight content of filler is from 30 to 70 %, preferably from 40 to 60 %, based on the total weight of the composition.

In some embodiments, said composition further comprises a moisture scavenger, such as vinyltrimethoxysilane.

The present invention also relates to a coating formed from a moisture-curable composition as defined herein.

Another object of the present invention is a method for sealing a substrate, said method comprising:
i) applying a moisture-curable composition as defined herein onto a substrate, so as to form an intermediate coating, and
ii) moisture-curing the intermediate coating, so as to obtain a cured coating.

In some embodiments, the method further comprises casting a cementitious material, such as concrete, onto the cured coating (which may be partially or totally cured upon said casting). In some embodiments, the thickness of the cured coating is from 0.5 to 7 mm, preferably from 1 to 5 mm, more preferably from 2 to 3 mm.

### DETAILED DESCRIPTION

In the present application, unless otherwise mentioned, the "molecular weight" of a polymer refers to its number-average molecular weight.

The number-average molecular weight can be determined by size exclusion chromatography ("SEC").

The moisture-curable composition of the invention may be referred hereinafter to as the "composition".

As used herein, a "mono-silyl-terminated polymer" refers to a polymer comprising (preferably consisting of) polymer chains, each having exactly one silyl termination.

A silyl termination may in particular be represented by the following formula (I):

-Si(OR¹)ₓ(R²)₃₋ₓ (I),

in which:
- x is 1, 2 or 3, preferably 2 or 3, more preferably 3,
- R¹('s) are each independently a hydrogen, C1-C20 aliphatic group, a C3-C20 alicyclic group, a C6-C20 aryl group, and
- R²('s) are each independently a hydrogen, a C1-C20 aliphatic group, a C3-C20 alicyclic group, a C6-C20 aryl group.

R¹ may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aryl.

Preferably, R¹ is/are each a C1-C12 aliphatic (e.g. C1-C12 alkyl or C2-C12 alkenyl, preferably C1-C12 alkyl) group.

More preferably, R¹ is/are each a C1-C6 alkyl (for instance a methyl, ethyl, propyl, or isopropyl).

R² may in particular be a C1-C12 aliphatic (e.g. C1-C20 alkyl or C2-C20 alkenyl), C3-C12 alicyclic (e.g. C3-C20 cycloalkyl or C3-C20 cycloalkenyl), C6-C12 aryl group.

Preferably, R² is/are each a C1-C12 aliphatic (e.g. C1-C12 alkyl or C2-C12 alkenyl, preferably C1-C12 alkyl) group.

More preferably, R² is/are each a C1-C6 alkyl (for instance a methyl, ethyl, propyl, or isopropyl).

In a particularly preferred embodiment, x is 3 and R¹'s are each a C1-C6 alkyl (for instance a methyl, ethyl, propyl, or isopropyl, preferably a methyl).

The term "aliphatic group" refers to a saturated or unsaturated, linear or branched, acyclic hydrocarbon group.

The term "alicyclic group" refers to a saturated or unsaturated (non-aromatic), linear or branched, mono- or poly-cyclic hydrocarbon group.

The term "alkyl group" refers to a linear or branched, acyclic saturated hydrocarbon group. The term "alkenyl group" refers to a linear or branched, acyclic unsaturated hydrocarbon group, comprising at least one carbon-carbon double bond.

The term "cycloalkyl group" refers to a linear or branched, mono- or poly-cyclic saturated hydrocarbon group.

The term "cycloalkenyl group" refers to a linear or branched, mono- or poly-cyclic unsaturated (non-aromatic) hydrocarbon group, comprising at least one carbon-carbon double bond. The term "aryl group" refers to an mono- or poly- aromatic hydrocarbon group.

The polymer of said mono-silyl-terminated polymer is advantageously chosen from polyethers, polyesters, polyurethanes, polycarbonates, polyacrylates, polyisoprenes, polybutadienes, or any combination thereof.

Preferably, the polymer of said mono-silyl-terminated polymer is a polyether.

The molecular weight of the mono-silyl-terminated polymer is advantageously from 2,000 to 50,000 g/mol, preferably from 4,000 to 40,000 g/mol, more preferably from 5,000 to 30,000 g/mol.

The mono-silyl-terminated polymer may be a mixture of mono-silyl-terminated polymers having various molecular weights. In such case, the molecular weight of the mono-silyl-terminated polymer is calculated on the basis on the number-average molecular weight of each mono-silyl-terminated polymer of the mixture and their weight content. For instance, if the mono-silyl-terminated polymer is a mixture of 80 wt% of a first mono-silyl-terminated polymer having a number-average molecular weight of 20,000 g/mol and 20 wt% of a second mono-silyl-terminated polymer having a number-average molecular weight of 10,000 g/mol, then the molecular weight of the mono-silyl-terminated polymer is: $0.8 \times 20 , 000 + 0 , 2 \times 10 , 000 = 18 , 000 g / mol .$

In some embodiments, the mono-silyl-terminated polymer may be a mixture comprising:
- from 5 to 40 wt% of a mono-silyl-terminated polymer having a molecular weight from 10,000 to 40,000 g/mol (A1), and
- from 60 to 95 wt% of a mono-silyl-terminated polymer having a molecular weight from 3,000 to 20,000 g/mol (B1), and
wherein the sum of the weight contents of (A1)+(B1) is more than 90 wt%, for instance more than 95 wt%.

In a preferred embodiment, the mono-silyl-terminated polymer is a mixture comprising :
- from 10 to 30 wt% of a mono-silyl-terminated polymer having a molecular weight from 15,000 to 30,000 g/mol (A1), and
- from 65 to 85 wt% of a mono-silyl-terminated polymer having a molecular weight from 4,000 to 12,000 g/mol (B1),
wherein the sum of the weight contents of (A1)+(B1) is more than 90 wt%, for instance more than 95 wt%.

The weight content of mono-silyl-terminated polymer is advantageously from 10 to 45 %, preferably from 20 to 40 %, more preferably from 25 to 35%, based on the total weight of the composition.

As used herein, a "poly-silyl-terminated polymer" refers to a polymer comprising (preferably consisting of) polymer chains, each having at least two silyl terminations.

Preferably, said poly-silyl-terminated polymer is a polymer comprising (preferably consisting of) polymer chains, each having two, three, four or five silyl terminations.

More preferably, said poly-silyl-terminated polymer is a polymer comprising (preferably consisting of) polymer chains, each having two, three, or four silyl terminations.

Even more preferably, said poly-silyl-terminated polymer is a polymer comprising (preferably consisting of) polymer chains, each having three silyl terminations (i.e. tri-silyl-terminated polymer).

In some embodiment, said poly-silyl-terminated polymer consists of polymer chains and has a silyl-functionality of at least 2, for instance from 2 to 5, preferably from 2.5 to 3.5.

As used herein, the silyl-functionality of a polymer is defined by the following equation (1): $\overline{f} = \frac{\sum xj \times nj}{\sum xj}$ (1), in which, for each polymer chain *j* of the polymer: *xj* is the number of moles of such polymer chain *j* and *nj* is the number of silyl terminations of such polymer chain *j*.

The silyl terminations of said poly-silyl-terminated polymer are preferably represented by formula (I) as defined above. It is understood that particular and preferred embodiments described above for formula (I) also applies to the silyl terminations of said poly-silyl-terminated polymer.

The polymer of said poly-silyl-terminated polymer is advantageously chosen from polyethers, polyesters, polyurethanes, polycarbonates, polyacrylates, polyisoprenes, polybutadienes, or any combination thereof.

Preferably, the polymer of said poly-silyl-terminated polymer is a polyether.

In a particularly preferred embodiment, said poly-silyl-terminated polymer is a tri-silyl-terminated polyether.

The molecular weight of the poly-silyl-terminated polymer is advantageously from 2,000 to 200,000 g/mol, preferably from 5,000 to 100,000 g/mol.

The poly-silyl-terminated polymer may be a mixture of poly-silyl-terminated polymers having various molecular weights.

In such case, the molecular weight of the poly-silyl-terminated polymer is calculated on the basis on the number-average molecular weight of each poly-silyl-terminated polymer of the mixture and their weight content.

In some embodiments, the poly-silyl-terminated polymer may be a mixture comprising :
- from 5 to 25 wt% of a poly-silyl-terminated polymer having a molecular weight from 60,000 to 90,000 g/mol (A2),
- from 55 to 80 wt% of a poly-silyl-terminated polymer having a molecular weight from 20,000 to 50,000 g/mol (B2), and
- from 5 to 20 wt% of a poly-silyl-terminated polymer having a molecular weight from 5,000 to 25,000 g/mol (C2),
wherein the sum of the weight contents of (A2)+(B2)+(C2) is more than 90%, for instance more than 95%.

In a preferred embodiment, the poly-silyl-terminated polymer is a mixture comprising :
- from 10 to 25 wt% of a poly-silyl-terminated polymer having a molecular weight from 65,000 to 90,000 g/mol (A2),
- from 60 to 80 wt% of a poly-silyl-terminated polymer having a molecular weight from 25,000 to 40,000 g/mol (B2), and
- from 5 to 15 wt% of a poly-silyl-terminated polymer having a molecular weight from 5,000 to 20,000 g/mol (C2),
wherein the sum of the weight contents of (A2)+(B2)+(C2) is more than 90%, for instance more than 95%.

The weight content of poly-silyl-terminated polymer is advantageously from 5 to 40 %, preferably from 10 to 30 %, more preferably from 15 to 25%, based on the total weight of the composition.

The total weight content of mono-silyl-terminated polymer and poly-silyl-terminated polymer is advantageously from 10 to 70 %, preferably from 20 to 60 %, more preferably from 40 to 55 %, based on the total weight of the composition.

The weight ratio of the mono-silyl-terminated polymer to the poly-silyl-terminated polymer is advantageously from 0.01 to 4, preferably from 0.1 to 3, more preferably from 0.5 to 2.5, even more preferably from 1 to 2, for instance from 1.3 to 1.7.

The composition of the invention also comprises one or more fillers. Such filler(s) may be chosen from talc, dolomite, mica, ground basalt, kaolin, chalk, powdered lime, fumed silica, zeolites, bentonites, magnesium carbonate, calcium carbonate, calcium sulfate, barium sulfate, kieselguhr, alumina, clay, silica, titanium oxide, iron oxide, zinc oxide, sand, quartz, flint, mica, glass powder, graphite, or any combination thereof.

Preferably, the filler is calcium carbonate.

Fillers are typically in a particulate form.

Fillers usually have a d50 that is lower than 100 µm, preferably from 0.1 to 50 µm, more preferably from 0.2 to 20 µm, even more preferably from 0.5 to 5 µm, for instance from 1 to 4 µm.

Fillers usually have a d98 that is lower than 100 µm, preferably from 0.5 to 90 µm, more preferably from 1 to 50 µm, even more preferably from 2 to 20 µm, for instance from 5 to 15 µm.

The d50 refers to the value for which 50% of the particles, by volume, have a size above the value and 50% of the particles, by volume, have a size below the value.

The d98 refers to the value for which 2% of the particles, by volume, have a size above the value and 98% of the particles, by volume, have a size below the value.

The d50 and d98 can be determined by laser diffraction.

In a preferred embodiment, the filler is calcium carbonate and has:
- a d50 which is from 0.2 to 20 µm, preferably from 0.5 to 5 µm, for instance from 1 to 4 µm, and
- a d98 which is from 1 to 50 µm, preferably from 2 to 20 µm, for instance from 5 to 15 µm.

The weight content of filler(s) is advantageously from 30 to 70 %, preferably from 40 to 60 %, based on the total weight of the composition.

Advantageously, the weight ratio of the total amount of mono-silyl-terminated polymer and poly-silyl-terminated polymer to the amount of filler(s) is from 0.4 to 2, preferably from 0.5 to 1.5, more preferably from 0.8 to 1.2.

The composition of the invention may further comprise one or more additives, such as additives chosen from pigments, rheology modifiers, light stabilizers, UV absorbers, antioxidants, moisture scavengers, adhesion promoters, and cross-linking catalysts.

In one embodiment, the composition of the invention further comprises a moisture scavenger.

Examples of moisture scavengers include monomeric alkylsilanes and monomeric vinyl group-containing silanes, such as vinyltrimethoxysilane or vinyltriethoxysilane.

The weight content of moisture scavengers is generally from 0.05 to 5%, preferably from 0.1 to 1%, relative to the total weight of the composition.

In one embodiment, the composition of the invention advantageously further comprises an adhesion promoter.

Examples of adhesions promoters include, but are not limited to, rosins, resins, terpene oligomers, coumarone/indene resins, aliphatic, petrochemical resins and modified phenol resins. More particularly, the adhesion promoter may be chosen from hydrocarbon resins (which are typically obtained by polymerization of terpenes, primarily α- or β-pinene, dipentene or limonene, optionally in combination with other monomers, for example styrene, α-methylstyrene, or isoprene), and terpenephenol resins (typically produced by acid-catalyzed addition of phenols onto terpenes or rosin).

The adhesion promoter may alternatively be a silane (in particular an amino-, mercapto-, or epoxy-silane), more particularly a diamino silane, octyltrimethoxysilane, or 3-glycidyloxypropyltrimethoxysilane.

The weight content of adhesion promoters is generally from 0.05 to 7%, for instance from 0.2 to 4%, or from 0.5 to 2%, relative to the total weight of the composition.

In one embodiment, the composition of the invention advantageously further comprises a cross-linking catalyst.

Examples of cross-linking catalysts include, but are not limited to, Lewis and/or Bronsted acids and bases. The crosslinking catalyst may in particular be a metal catalyst or a nitrogen-containing catalyst.

Suitable metal catalysts are in particular organotin compounds, organotitanates, organozirconates and organoaluminates. The organotitanates, organozirconates and organoaluminates preferably have ligands which are selected from an alkoxy group, sulfonate group, carboxylate group, dialkylphosphate group, dialkylpyrophosphate group and acetylacetonate group, where all ligands may be identical or different from each other.

Suitable nitrogen-containing compounds are for example amidines (such as 1,8-diazabicyclo[5.4.0]undec-7-ene (DBU), 1,5-diazabicyclo[4.3.0]non-5-ene (DBN), 6-dibutylamino-1,8-diazabicyclo[5.4.0]undec-7-ene; methyl-triazabicyclodecene, guanidines, imidazoles), amines (such as in particular N-ethyldiisopropylamine, N,N,N',N'-tetramethylalkylenediamines, polyoxyalkyleneamines, 1,4-diazabicyclo[2.2.2]octane), or aminosilanes (such as 3-aminopropyltrimethoxysilane, 3-aminopropyldimethoxymethylsilane, N-(2-aminoethyl)-3-aminopropyltrimethoxysilane, N-(2-aminoethyl)-3-aminopropylmethyldimethoxysilane, N-(2-aminoethyl)-N'-[3-(trimethoxysilyl)propyl]ethylenediamine).

The weight content of cross-linking catalysts is generally from 0.02 to 5%, for instance from 0.05 to 1%, or from 0.1 to 0.5%, relative to the total weight of the composition.

Preferably, the composition of the invention further comprises a moisture scavenger, an adhesion promoter, and a cross-linking catalyst.

More preferably, the composition of the invention further comprises a pigment, a rheology modifier, a light stabilizer, a UV absorber, an antioxidant, a moisture scavenger, an adhesion promoter, and a cross-linking catalyst.

Advantageously, the composition of the invention comprises no plasticizer, or if present, the weight content of such plasticizer is less than 5%, preferably less than 4%, more preferably less than 2%, even more preferably less than 1%, for instance less than 0.5% based on the total weight of the composition. Examples of such plasticizers include phthalates (e.g. dioctyl phthalates, diisononyl phthalates, diisodecyl phthalates), adipates (e.g., dioctyl adipates), benzoates, azelates, sebacates, polymeric polyols (e.g., polyoxyalkylenopolyols, polyesterpolyols), polypropylene glycol, glycol esters, glycol ether ester, organic phosphoric/sulfonic esters, polybutenes, polystyrenes, polybutadienes, polychloroprenes, polyisoprenes, parafins, fatty acid methyl (or ethyl) esters derived from natural fats, oils or castor oils, or any mixture thereof.

Advantageously, the composition of the invention comprises no water, or if present, the weight content of water is less than 2 wt%, preferably less than 1 wt%, more preferably less than 0.5 wt%, or even less than 0.2 wt% of water, relative to the total weight of the composition.

The composition of the invention is particularly suitable for forming a coating.

Hence, the present invention relates to a coating formed from a moisture-curable composition as defined herein, more particularly by moisture-curing said composition, or even more particularly by applying (for instance by using a brush, a roller or trowel or by spraying) and moisture-curing such composition.

The coating of the invention is typically a sealing coating, more particularly a waterproofing coating, for instance a waterproofing membrane. The coating of the invention preferably has a thickness of from 0.5 to 7 mm, preferably from 1 to 5 mm, more preferably from 2 to 3 mm.

The thickness of a coating can be measured by using a comb for coating thickness measurement.

The coating of the invention advantageously has a Bond-to-concrete at 23°C higher than 1 N/mm, preferably from 1.5 to 5 N/mm, more preferably from 2 to 5 N/mm. Said bond-to-concrete can be measured as described in the examples (according to ASTM D903-98 (2017) modified).

Another object of the present invention is a method for sealing (e.g. waterproofing) a substrate, said method comprising:
i) applying a moisture-curable composition as defined herein onto a substrate, so as to form an intermediate coating, and
ii) moisture-curing the intermediate coating, so as to obtain a cured coating.

The applying may be carried out by any suitable technique, such as by using a roller, a brush, or a trowel, or by spraying. The applying can be done in several layers (for instance two layers).

The moisture-curing is typically a curing by the moisture from the ambient air. The moisture-curing typically occurs at room temperature, without external heating. "Room temperature" may in particular refer to a temperature from 5 to 40 °C.

The substrate may be made of cementitious material (e.g. concrete or cement mortar), stone (e.g. limestone), brick, terracotta, sandstone, ceramic, metal, metal alloy (e.g. steel), plastic (e.g. polyvinyl chloride, polyethylene such as high-density polyethylene), a polymer-based membrane, a cured epoxy mortar, or any combination thereof.

The substrate may be a combination of substrates, each being of made of a material typically chosen from cementitious material (e.g. concrete or cement mortar), stone (e.g. limestone), brick, terracotta, sandstone, ceramic, metal, metal alloy (e.g. steel), plastic (e.g. polyvinyl chloride, polyethylene such as high-density polyethylene), a polymer-based membrane, a cured epoxy mortar, or any combination thereof.

The coating (i.e. cured coating) of the invention preferably has a thickness of 0.5 to 7 mm, preferably from 1 to 5 mm, more preferably from 2 to 3 mm.

The method of the invention may further comprise:
iii) casting a cementitious material, such as concrete, onto the cured coating.

Said step iii) can be implemented after a partial or total moisture-curing of the intermediate coating.

The present invention is illustrated by the following non-limiting examples.

### EXAMPLES

The composition as described in Table 1 was prepared, and was subjected to the following tests:
- Bond-to-concrete (BTC): the composition was applied on a substrate to form a liquid membrane. After 7 days of curing, the sample was installed into a mold, and fresh concrete was poured on it. Sample with concrete on it cured for 7 days, and was then removed from the mold. Four 50 mm wide specimens were cut, and peel adhesion was tested using ASTM D903-98 (2017) with modification of angle of testing: 90 degree peel and speed 2 inch/min (50 mm/min).
- BTC after water immersion 28 days: Sample was prepared as described in BTC test and was subjected to the peel testing (i.e. said modified ASTM D903-98 (2017)) after being totally immersed into water for 28 days.
- Tensile strength, Elongation, Stress at 100% elongation: A cured membrane was formed and the free membrane was subjected to test according to method B (dumbbell) of standard EN 12311-2.
- Water absorption: Free cured membrane samples were weighted and immersed in water. Weight was checked after 7 days. Water absorption was then calculated.
- Adhesion to damp concrete: the composition was applied on damp cured concrete block to form a liquid membrane, and was cured for 7 days. Then, the sample was subjected to the peel testing (i.e. said modified ASTM D903-98 (2017)).
- Adhesion to damp concrete after water immersion 28 days: the cured membrane on damp cured concrete block was totally immersed into water for 28 days, and then was subjected to the peel testing (i.e. said modified ASTM D903-98 (2017)).
- Adhesion to dry concrete: the composition was applied on dry cured concrete block to form a liquid membrane, and was cured for 7 days. Then, the sample was subjected to the peel testing (i.e. said modified ASTM D903-98 (2017)).
- Adhesion to dry concrete after water immersion 28 days: the cured membrane on dry cured concrete block was totally immersed into water for 28 days, and then was subjected to the peel testing (i.e. said modified ASTM D903-98 (2017)).
- Adhesion to steel plate: the composition was applied on a steel plate to form a liquid membrane, and was cured for 7 days. Then, the sample was subjected to the peel testing (i.e. said modified ASTM D903-98 (2017)).

In the various tests, the thickness of the cured membrane is around 2.5 mm.

A comparative composition was also prepared and tested. The comparative composition was equivalent to the composition of Table 1, except that there was no mono-silyl-terminated polyether (the corresponding amount of mono-silyl-terminated polyether of Table 1 was replaced with poly-silyl terminated polyether).

The results of the tests for both compositions are shown in Table 2.

**Table 1**

| **Composition according to the invention** | Weight content, wt% |
|---|---|
| *Poly-silyl-terminated polyether^{a}* | 19 |
| *Mono-silyl-terminated polyether^{b}* | 28 |
| Calcium carbonate (Microcarb 60): *Filler* | 48.1 |
| Pigment | 0.2 |
| Amide wax: *Rheology modifier* | 2 |
| Vinyltrimethoxysilane: *Moisture scavenger* | 0.5 |
| Oligomeric diamino-silane-system: *Adhesion promoter* | 1 |
| Cross-linking catalyst | 0.2 |

| | |
|---|---|
| ^{a} 20 wt% at 75 000 g/mol + 70 wt% at 30 200 g/mol + 10 wt% at 14200 g/mol ^{b} 20 wt% at 22 000 g/mol + 80 wt% at 7700 g/mol | |

**Table 2**

| **Property** | **Composition of the invention** | **Comparative composition** |
|---|---|---|
| BTC, N/mm | 3.22 (coh) | 0 |
| BTC after water immersion 28 days, N/mm | 1.79 (coh) | 0 |
| Tensile strength, MPa | 1 | - |
| Elongation, % | 465 | - |
| Stress at 100% elongation, MPa | 0.21 | - |
| Water absorption (7 days), % | 3.90% | - |
| Adhesion to damp concrete, N/mm | 2.3 (coh) | - |
| Adhesion to damp concrete after water immersion 28d, N/mm | 1.66 (coh) | - |
| Adhesion to dry concrete, N/mm | 3.10 (coh) | - |
| Adhesion to dry concrete after water immersion 28d, N/mm | 1.09 (adh) | - |
| Adhesion to steel plate, N/mm | 2.87 (coh) | - |

| | | |
|---|---|---|
| Failure mode : Coh = cohesive failure, Adh = adhesive failure | | |

Table 2 shows that the combination of a mono-silyl-terminated polymer and a poly-silyl-terminated polymer in the composition of the invention allows to obtain a high bond-to-concrete and high adhesion to various substrates (e.g. concrete, steel), even after water immersion. On the contrary, the comparative composition which is based on poly-silyl-terminated polymers only has no bond-to-concrete.

## Claims

1. A moisture-curable composition comprising:
- a mono-silyl-terminated polymer,
- a poly-silyl-terminated polymer, and
- a filler.

2. The moisture-curable composition according to claim 1, wherein said composition comprises no plasticizer, or if present, the weight content of such plasticizer is less than 5 %, based on the total weight of the composition.

3. The moisture-curable composition according to claim 1 or 2, wherein the polymer of said mono-silyl-terminated polymer and the polymer of said poly-silyl-terminated polymer are each independently chosen from polyethers, polyesters, polyurethanes, polycarbonates, polyacrylates, polyisoprenes, polybutadienes, or any combination thereof.

4. The moisture-curable composition according to any one of claims 1 to 3, wherein said mono-silyl-terminated polymer is a mono-silyl-terminated polyether.

5. The moisture-curable composition according to any one of claims 1 to 4, wherein said poly-silyl-terminated polymer is a poly-silyl-terminated polyether, preferably a tri-silyl-terminated polyether.

6. The moisture-curable composition according to any one of claims 1 to 5, wherein:
- the molecular weight of the mono-silyl-terminated polymer is from 2,000 to 50,000 g/mol, preferably from 4,000 to 40,000 g/mol, more preferably from 5,000 to 30,000 g/mol; and/or
- the molecular weight of the poly-silyl-terminated polymer is from 2,000 to 200,000 g/mol, preferably from 5,000 to 100,000 g/mol.

7. The moisture-curable composition according to any one of claims 1 to 6, wherein the mono-silyl-terminated polymer is a mixture comprising :
- from 5 to 40 wt% of a mono-silyl-terminated polymer having a number-average molecular weight from 10,000 to 40,000 g/mol (A1), and
- from 60 to 95 wt% of a mono-silyl-terminated polymer having a number-average molecular weight from 3,000 to 20,000 g/mol (B1),
wherein the sum of the weight contents of (A1)+(B1) is more than 90 wt%, for instance more than 95 wt%.

8. The moisture-curable composition according to any one of claims 1 to 7, wherein the poly-silyl-terminated polymer is a mixture comprising :
- from 5 to 25 wt% of a poly-silyl-terminated polymer having a number-average molecular weight from 60,000 to 90,000 g/mol (A2),
- from 55 to 80 wt% of a poly-silyl-terminated polymer having a number-average molecular weight from 20,000 to 50,000 g/mol (B2), and
- from 5 to 20 wt% of a poly-silyl-terminated polymer having a number-average molecular weight from 5,000 to 25,000 g/mol (C2),
wherein the sum of the weight contents of (A2)+(B2)+(C2) is more than 90%, for instance more than 95%.

9. The moisture-curable composition according to any one of claims 1 to 8, wherein the filler is chosen from talc, dolomite, mica, ground basalt, kaolin, chalk, powdered lime, fumed silica, zeolites, bentonites, magnesium carbonate, calcium carbonate, calcium sulfate, barium sulfate, kieselguhr, alumina, clay, silica, titanium oxide, iron oxide, zinc oxide, sand, quartz, flint, mica, glass powder, graphite, or any combination thereof, preferably the filler is calcium carbonate.

10. The moisture-curable composition according to any one of claims 1 to 9, wherein the weight ratio of the mono-silyl-terminated polymer to the poly-silyl-terminated polymer is from 0.01 to 4, preferably from 0.1 to 3, more preferably from 0.5 to 2.5, even more preferably from 1 to 2, for instance from 1.3 to 1.7.

11. The moisture-curable composition according to any one of claims 1 to 10, wherein the weight ratio of the total amount of mono-silyl-terminated polymer and poly-silyl-terminated polymer to the amount of filler is from 0.4 to 2, preferably from 0.5 to 1.5, more preferably from 0.8 to 1.2.

12. The moisture-curable composition according to any one of claims 1 to 11, wherein the total weight content of mono-silyl-terminated polymer and poly-silyl-terminated polymer is from 10 to 70 %, preferably from 20 to 60 %, more preferably from 40 to 55 %, based on the total weight of the composition.

13. The moisture-curable composition according to any one of claims 1 to 12, wherein the weight content of filler is from 30 to 70 %, preferably from 40 to 60 %, based on the total weight of the composition.

14. A coating formed from a moisture-curable composition as defined in any one of claims 1 to 13.

15. A method for sealing a substrate, said method comprising:
i) applying a moisture-curable composition as defined in any one of claims 1 to 13 onto a substrate, so as to form an intermediate coating, and
ii) moisture-curing the intermediate coating, so as to obtain a cured coating,
wherein the thickness of the cured coating is preferably from 0.5 to 7 mm, more preferably from 1 to 5 mm, even more preferably from 2 to 3 mm.

16. The method according to claim 15, further comprising casting a cementitious material, such as concrete, onto the cured coating.
